# EUROPEAN PATENT APPLICATION

(11) **EP 0 874 263 A1**
(43) Date of publication of application: **28.10.1998**
(21) Application number: 98106243.3
(22) Date of filing: 06.04.1998
(51) Int. Cl.: G02F 1/09, G02B 6/26, G02B 27/28

(54) **Optical circulator**

(30) Priority: 07.04.1997 US 826669
(71) Applicant: JDS FITEL INC., Nepean, Ontario K2G 5W8 (CA)
(72) Inventor: Cheng, Yihao, Kanata, Ontario K2M 2L6 (CA)
(74) Representative: Frei, Alexandra Sarah

(57) **Abstract**

A compact non-reciprocal optical waveguide-circulating device is disclosed. Three optical waveguides (8a,b,c) are disposed along side one another at an input end adjacent a thin birefringent crystal (10) to which they are optically coupled. The circulating device also includes at a distal end, a mirror (20) for reflecting light backwards and providing a folded configuration. The device is capable of accepting a non-collimated beam of light that is launched from the input end through the birefringent crystal (10) and rotating elements (12a,b,c,d,14). By providing end faces at one end of the waveguides that are mode field expanded, light is effectively coupled between the waveguides and the adjacent crystal. A grin lens (18) is disposed between a Faraday rotator (14) ane the mirror (20).

## Description

### Field of the Invention

The present invention relates to an optical circulator for use in optical communications.

### Background of the Invention

A practical way to double the bit carrying capacity of an existing unidirectional fiber optic communication link is by the use of optical circulators. An optical circulator is a passive, non-reciprocal device, which permits full duplex communication on a single fiber optic link. Thus, a typical fiber optic communication link operating on two fibers can be quickly and economically converted to a bi-directional, single fiber communication link by installing an optical circulator at each end of the link.

An advantage of optical circulators over more traditional 3 dB couplers is that the loss penalty is much lower. Using a 3 dB coupler at each end of a fiber link, there is an insertion loss of at least 6 dB. For connections that operate near their detection limits, this additional 6-dB loss could make bi-directional communication impracticable.

In an optical circulator insertion loss and cross-talk as well as simplicity and cost are important considerations. Insertion loss is the difference in power between light launched into the optical circulator and the power that exits the device. Insertion loss is largely due to absorption of light and to coupling loss.

Prior art optical circulators are described in U.S. Pat. No. 4,650,289, issued to Kuwahara; U.S. Pat. No. 4,464,022, issued to Emkey; and in U.S. Pat. No. 4,859,014, issued to Schmitt et al. However, optical circulators made as described in these references relatively costly due to the large size of optical components required. For example, optical circulators generally require collimated beams, or lensing that will achieve collimation. However, a typical collimated beam in prior art circulators has a beam diameter of ∼350 µm, and when a beam is split into two beams having two polarization states, components such as birefringent crystals are required that are sized to accept beams of such diameters.
It is an object of one embodiment of this invention to provide an optical circulator that does not collimate or require collimated light passing through it. As a result, an optical circulator can be manufactured using smaller less costly components than in prior art devices.

It is also an object of the invention to provide a device that has lower insertion loss and cross-talk. Although some prior art devices use a folded configuration, this invention provides a folded configuration that only requires small birefringent crystals and other optical components. Hence, cost and size of the device are reduced.

U.S. Pat. No. 5,204,771 issued April 20, 1993 in the name of Koga appears to perform its intended function adequately, however results in a large device compared with the folded configuration of the present invention. Furthermore, Koga requires large components in contrast to this invention.

United States patent No. 5,471,340 in the name of Cheng et al., issued November 28, 1995 provides a simpler configuration than Koga however requires large more expensive birefringent crystals.

It is therefore an object of the invention, to overcome many of the limitations of known prior art devices.

### Summary of the Invention

In accordance with the invention, a non-reciprocal optical waveguide-circulating device comprising a first and second optical waveguide coupled by a common first optical path such that light launched into the first optical waveguide is directed to the second optical waveguide, respective ends of the first and second optical waveguides being at a same first end of the device; a third optical waveguide at the first end of the device having an end substantially adjacent to one of the ends of the first and second optical waveguides, said third optical waveguide coupled by a second common optical path with the second optical waveguide such that light launched into the second optical waveguide is directed to the third optical waveguide; at least partially reflective means at or about another end of the device for directing light launched into the first optical waveguide toward the second optical waveguide, and for directing light launched into the second optical waveguide to the third optical waveguide; a lens disposed in the first and second optical paths between the reflective means and the waveguides, the lens sized to receive and pass light launched into the first optical waveguide to the reflective means and to pass light launched into second optical waveguide to the reflective means, and further, to receive and pass light from the reflective means to one of the second and third optical waveguides; and, means for steering and rotating light launched into the device in a polarization dependent manner such that light launched into the first optical waveguide is separated into two orthogonally polarized beams which are rotated and combined along the first optical path before being circulated to the second optical waveguide, and such that light launched into the second optical waveguide is separated into two orthogonally polarized beams which are rotated and combined along the second optical path before being circulated to the third optical waveguide, said means for steering and rotating light including means for substantially preventing light launched into the first optical waveguide from circulating to the third optical waveguide, and for substantially preventing light launched into the second optical waveguide from circulating to the first optical waveguide.
In accordance with the invention, there is further provided a optical circulator comprising a first and second optical port coupled by a common first optical path such that light launched into the first optical port is directed to the second optical port, said ports being at a same first end of the device; a third optical port at the first end of the device having an end and being coupled by a second common optical path with the second optical port such that light launched into the second optical port is directed to the third optical port; at least partially reflective means at or about another end of the device for directing light launched into the first optical port toward the second optical port, and for directing light launched into the second optical port to the third optical port; a lens disposed in both the first and second optical paths between the reflective means and the ports, the lens sized to receive and pass light launched into the first optical port to the reflective means and to pass light launched into second optical port to the reflective means, and further, to receive and pass light from the reflective means to one of the second and third optical port; and, means for steering and rotating light launched into the device in a polarization dependent manner such that light launched into the first optical port is separated into two orthogonal polarized beams that are rotated and combined along the first optical path before being circulated to the second optical port, and such that light launched into the second optical port is separated into two orthogonal polarized beams which are rotated, and combined along the second optical path before being circulated to the third optical port.
Advantageously, the circulator in accordance with an embodiment of this invention allows a noncollimated beam to be launched through its beam splitting, rotating and shifting components, thereby lessening the requirement for standard large components. As well, in another embodiment of this invention allows a substantially collimated beam having a very small diameter to be launched through its beam splitting, rotating and shifting components, thereby lessening the requirement for standard large components. This considerably reduces the cost of manufacturing the device.

### Brief Description of the Drawings

Exemplary embodiments of the invention will now be described in conjunction with the drawings in which:
Fig. 1 is a schematic view showing a first embodiment of an optical circulator of the present invention;
Fig. 1a is a view in cross-section of 4 waveplates in accordance with the embodiment shown in Fig. 1;
Fig. 2a is a diagrammatic view showing the light at different interfaces of the device of Fig. 1 from ports 1 to 2;
Fig. 2b is a diagrammatic view showing the light at different interfaces of the device of Fig. 1 from ports 2 to 3;
Fig. 3 is an enlarged broken away view of a portion of an optical fiber tube holding a lensed optical fibre; and,
Fig. 4 is a schematic view of the circulator in accordance with this invention showing the light path from one port to another.

### Detailed Description

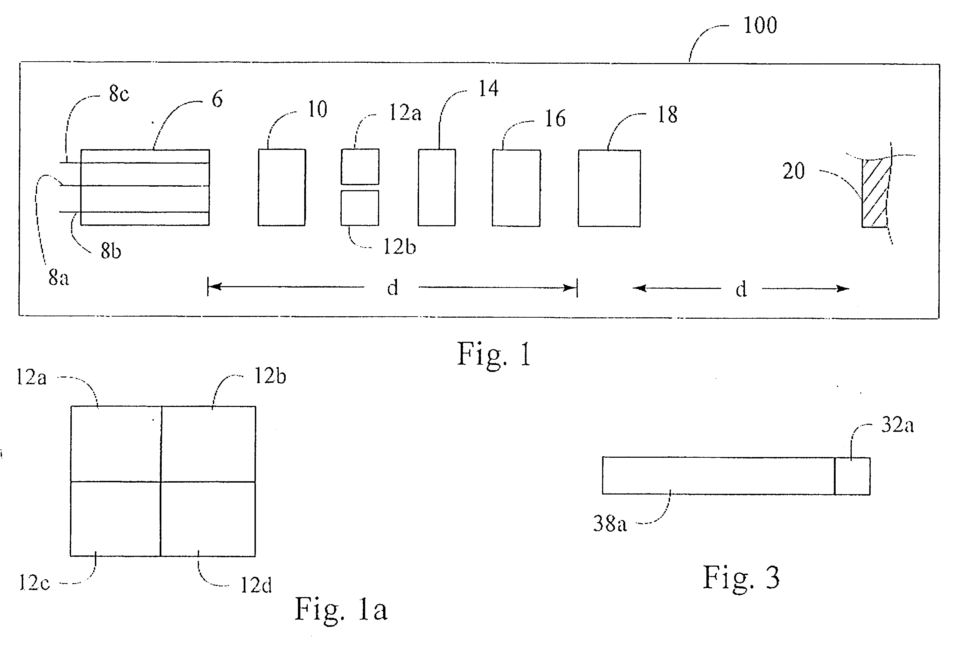

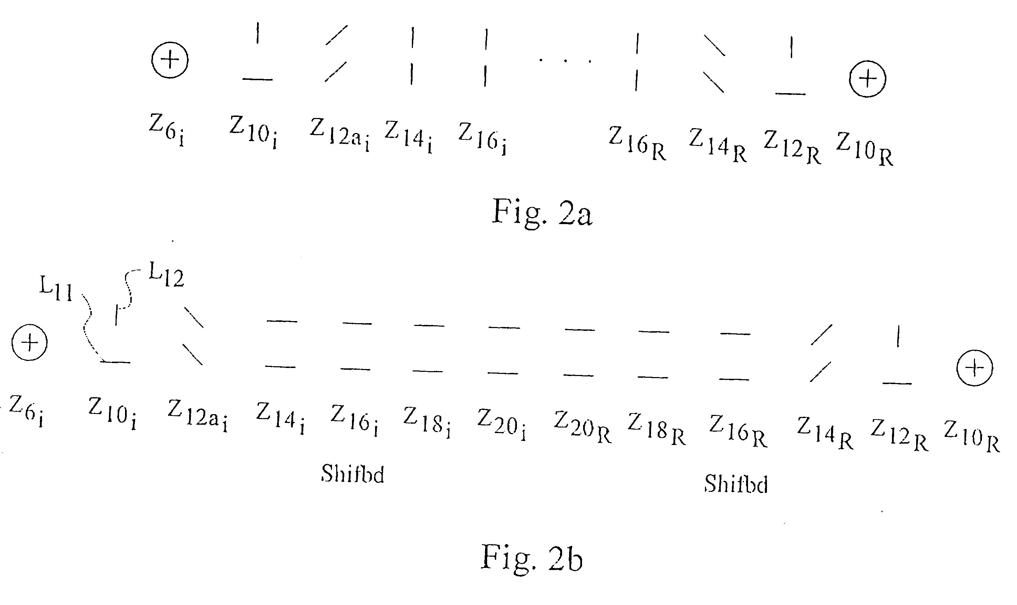

The first embodiment of the optical circulator of this invention is described with reference to Figs 1, 1a, 2a and 2b.

In a first embodiment, a three-port optical circulator 100 is shown. Three optical fibres 8a, 8b, and 8c serving as ports 1, 2 and 3 respectively are disposed along side one another having substantially parallel longitudinal axes within an optical fibre tube 6. A thin block of birefringent material in the form of a birefringent crystal plate 10 having a dimension of approximately 2mm x 2mm is disposed adjacent an inward end face of the fibre tube 6 to receive light from ports 1 and 2 and to provide light to ports 2 and 3 respectively. Preferably, end faces of the optical fibres at the inward end face of the fibre tube adjacent a crystal plate 10, have mode field expanded cores (and consequently a small numerical aperture), such as thermally expanded core (TEC) optical fibers to enhance coupling and also to reduce the size of the birefringent crystal necessary for separating the two polarizations. Numerical aperture (NA) or acceptance angle of an optical fibre, is inversely proportional to the square root of the core diameter of an optical fibre. A consequence of a larger NA is a larger angular divergence of an output beam exiting. One way of providing an optical fibre that has a small NA or acceptance angle is to expand the core of the fibre by heating. A conventional beam expanding fiber is disclosed in a reference entitled "Beam Expanding Fiber Using Thermal Diffusion of the Dopant" in Journal of Lightwave Technology. Vol. 8, No. 8 August 1990. The beam expanding fiber of the above reference has a core whose index of refraction is determined by the dopant e.g., Ge, that is thermally diffused so that a spot size of the fundamental mode, which corresponds to "mode-field diameter of the optical fiber", is partially expanded. Producing an optical fibre having an small NA can also be achieved by doping the fibre such that the cladding and the core have a small difference in refractive index. Since a collimated beam is not required for the circulating operation, fibres having a small acceptance angle at one end provide input output ports to ensure adequate coupling of light to and from adjacent optical components. As the light exiting and entering the optical fiber from the birefringent crystal 10 is uncollimated and hence diverging/converging, by providing fibre ends for receiving the light, having a small acceptance angle, the size and thus the cost of the birefringent crystal required is reduced considerably. For example, in the embodiment of the invention described, a short birefringent crystal 10 can be used and adequate separation of two polarized output beams is realized. The input fibres adjacent the crystal each have a small numerical aperture or acceptance angle of 0.03 and a core diameter of 35 µm at their end face adjacent the crystal.

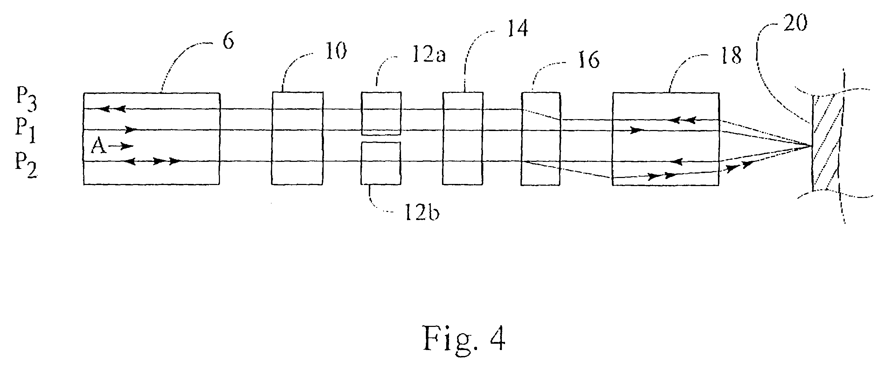

In Fig. 1 two half waveplates 12a and 12b, and a Faraday rotating element 14 are disposed between the thin birefringent crystal plate 10 and a second birefringent crystal plate 16 which primarily serves as a means of shifting a light beam from the second port to be incident upon the a mirror 20 so that it reflects backward to the third port. This is illustrated in Fig. 4. A (GRIN) lens 18 is disposed between the Faraday rotator and a reflective means in the form of the mirror 20. The optical path length between the output end face of the lens 18 and the mirror 20 is approximately the same as the optical path length between the input end face of the lens 18 and the second end face of the fibre tube 6. YVO₄ , Calcite or rutile crystals are preferably used for the above crystal plates 10 and 16. The non-reciprocal rotator 12 is preferably a Faraday rotating element using a Y.I.G crystal or Bi-added thin film crystals. The composition of the Bi-added thin film crystal includes a combination of, for example, (YbTbBi)₃Fe₅O₁₂ and (GdBi)₃(GeAlGa)₅O₁₂ , or of Y.I.G. and Y₃ₓBiₓFe₅O₁₂.

The operation of the circulator is understood viewing Figs 2a and 2b which show polarized light in a path A from port 1 to port 2, and from port 2 to port 3 respectively;
Fig. 2a is a view of polarized light in a path, A going from the light incoming and outgoing port 1 to the light incoming and outgoing port 2 viewed from the side of the incoming light. (the side of the incoming and outgoing port 1). States Z10ᵢ, Z12ᵢ, Z14ᵢ through Z20i are indicated and coincide with end faces 10, 12 through 20 in Fig. 2a, traveling along an axis in a direction from port 1 to the mirror 20. States Z20ᵣ, Z18ᵣ, Z16ᵣ, through Z10r are indicated and coincide with end faces 20, 18 through 10 in Fig. 2a, traveling along a Z-axis in a direction from the mirror 20 to the port 2. Light injected from the light incoming and outgoing port 1, is in a state Z10 and is separated into light L11 and light L12 on an X-Y plane by a first double refraction crystal plate 10. The light L11 is ordinary light (O-ray) relative to the first double refraction crystal plate 10 and light L12 is the extraordinary (E-ray). The light is polarized at right angles as shown by Z10. The electric field vibration of light L11 and light L12 which are perpendicular to each other, proceed in the same direction as a result of the light L11 and L12 passing through the half wave plate 12a and 12c. The state of the polarization of the light exiting the plate 12 at this time is shown by Z12; L11 and L12 having been rotated 45 degrees by 12. State Z14 shows the light as being rotated by another 45 degrees. The L11 and L12 now oriented along a same axis orthogonal to the birefringent crystal 16 pass through it and the lens adjacent to it, unchanged. Thus states Z16, Z18, and Z20 for this light are identical and the polarization of light is not altered by elements 16, 18, and 20.
The polarization of the light L11 and L12 is unchanged as it is reflected from the mirror 20, propagates back through to lens 18, and through the birefringent crystal 16 as shown by states Z20ᵣ, Z18ᵣ, Z16ᵣ. As the light travels through the non-reciprocal Faraday rotating element 14 it is rotated (state Z14ᵣ). Subsequently, as the light is passed through the rotating element 12b it is rotated by 45 degrees as shown by state Z12b_{r,} L11 and L12 being orthogonal; and finally, the beams of light L11 and L12 being combined at port 2 by the crystal plate 10.
As light propagates from port 2 to port 3, it is first divided into two orthogonal rays by the birefringent crystal 10, as was the case for light travelling from port 1 to port 2. However, the waveplate 12b and 12d oriented oppositely from waveplate 12a and 12c, rotates the light L11 and L12 45 degrees in a counter clockwise direction as is shown by state Z12bᵢ (as opposed to the clockwise direction from waveplate 12a). After this light passes the Faraday rotator 14, indicated by state Z14_{i, the} beams having a same polarization (E-rays) are shifted by the birefringent crystal 16 thereby changing the angle at which they are incident upon the minor 20. Conveniently, this directs the beam to port 3 via reflection from the mirror 20. On the return path the light is further shifted by the birefringent crystal 16, however its polarization states are not changed while traversing elements 16, 18 and 20.

Fig. 3 shows an alternative embodiment, wherein very small collimating graded index (GRIN) lenses 32a, 32b, (not shown) and 32c (not shown) are coupled to inwardly facing end faces of optical fibers 38a, 38b, and 38c respectively, to reduce the divergence of the beam. GRIN lenses are one of the more ubiquitous building blocks used in the design and manufacture of optical components. Lenses of this type are produced under the trade name "SELFOC"; the mark is registered in Japan and owned by the Nippon Sheet and Glass Co. Ltd. The GRIN lenses used in this embodiment are extremely small, having a diameter of approximately, 500 µm and collimate the light exiting the ports. The circulator here otherwise functions in the same manner as the circulator of Fig. 1.
Fig. 4 shows the direction of the light path as light launched into port 1 is circulated to port 2. A line having a single arrow indicates this light. Double arrows are used to indicate light launched into port 2 being circulated to port 3. Because the light incident upon the crystal 16 consists of E-rays, the light is shifted and consequently, is directed away from the path of the light traveling from port 1 to port 2, and is directed to port 3. In contrast, the O-ray incident upon the same crystal 16 was not shifted by passed through the crystal unaffected, when light was launched into port 1 circulating to port 2.
In both of the embodiments of the invention described, a relatively small beam is launched through the birefringent crystal, from one port to another. The beam may or may not be collimated. Conveniently, TEC fibre can be used wherein mode field expanded ends provide sufficient coupling of light between the end face of the fibre and the crystal 10.

## Claims

1. A non-reciprocal optical waveguide-circulating device comprising a first and second optical waveguide coupled by a common first optical path such that light launched into the first optical waveguide is directed to the second optical waveguide, respective ends of the first and second optical waveguides being at a same first end of the device;
a third optical waveguide at the first end of the device having an end substantially adjacent to one of the ends of the first and second optical waveguides, said third optical waveguide coupled by a second common optical path with the second optical waveguide such that light launched into the second optical waveguide is directed to the third optical waveguide;
at least partially reflective means at or about another end of the device for directing light launched into the first optical waveguide toward the second optical waveguide, and for directing light launched into the second optical waveguide to the third optical waveguide;
a lens disposed in the first and second optical paths between the reflective means and the waveguides, the lens sized to receive and pass light launched into the first optical waveguide to the reflective means and to pass light launched into second optical waveguide to the reflective means, and further, to receive and pass light from the reflective means to one of the second and third optical waveguides, and,
means for steering and rotating light launched into the device in a polarization dependent manner such that light launched into the first optical waveguide is separated into two orthogonally polarized beams which are rotated and combined along the first optical path before being circulated to the second optical waveguide, and such that light launched into the second optical waveguide is separated into two orthogonally polarized beams which are rotated and combined along the second optical path before being circulated to the third optical waveguide, said means for steering and rotating light including means for substantially preventing light launched into the first optical waveguide from circulating to the third optical waveguide, and for substantially preventing light launched into the second optical waveguide from circulating to the first optical waveguide.

2. A non-reciprocal optical waveguide-circulating device as defined in claim 1, wherein the first and second fibres are adjacent to one another.

3. A non-reciprocal optical waveguide-circulating device as defined in claim 1, wherein the ends of the waveguides have expanded mode fields to provide a beam having an acceptance angle less than the beam separation angle of the birefringent crystal.

4. A non-reciprocal optical waveguide-circulating device as defined in claim 1, wherein an end face of each waveguide is coupled to a GRIN lens.

5. A non-reciprocal optical waveguide-circulating device as defined in claim 1, wherein an optical path length between a waveguide end face and the lens, is approximately the same as the optical path length between and end face of the lens and the reflective means.

6. A non-reciprocal optical waveguide-circulating device as defined in claim 5, wherein the reflective means is a substantially reflective mirror.

7. A non-reciprocal optical waveguide-circulating device as defined in claim 6, wherein the ends of the waveguides have expanded mode fields to provide a beam having a acceptance angle less than the beam separation angle of the birefringent crystal.

8. A optical circulator comprising a first and second optical port coupled by a common first optical path such that light launched into the first optical port is directed to the second optical port, said ports being at a same first end of the device;
a third optical port at the first end of the device having an end and being coupled by a second common optical path with the second optical port such that light launched into the second optical port is directed to the third optical port;
at least partially reflective means at or about another end of the device for directing light launched into the first optical port toward the second optical port, and for directing light launched into the second optical port to the third optical port;
a lens disposed in both the first and second optical paths between the reflective means and the ports, the lens sized to receive and pass light launched into the first optical port to the reflective means and to pass light launched into second optical port to the reflective means, and further, to receive and pass light from the reflective means to one of the second and third optical port; and, means for steering and rotating light launched into the device in a polarization dependent manner such that light launched into the first optical port is separated into two orthogonally polarized beams that are rotated and combined along the first optical path before being circulated to the second optical port, and such that light launched into the second optical port is separated into two orthogonally polarized beams which are rotated, and combined along the second optical path before being circulated to the third optical port.

9. An optical circulator as defined in claim 8, wherein the ports each include a mode field expanded fibre.

10. An optical circulator as defined in claim 8, wherein each port includes a separate GRIN lens for substantially collimating/focusing light.

11. A non-reciprocal optical waveguide-circulating device as defined in claim 1 wherein the means for steering and rotating light comprises polarization-rotating means for rotating light sandwiched between first and second birefringent crystals.

12. A non-reciprocal optical waveguide-circulating device as defined in claim 11 wherein the means for steering and rotating is between the lens and waveguides.

13. A non-reciprocal optical waveguide-circulating device as defined in claim 12 wherein polarization-rotating means comprises waveplate means and Faraday rotating means.
